(19) **Europäisches Patentamt / European Patent Office / Office européen des brevets**

(11) **EP 4 331 258 B1**

(12) **EUROPEAN PATENT SPECIFICATION**

(45) Date of publication and mention
of the grant of the patent:
**07.01.2026 Bulletin 2026/02**

(21) Application number: **21939496.2**

(22) Date of filing: **29.04.2021**

(51) International Patent Classification (IPC):
**G06N 3/04** *(2023.01)* **H04W 52/02** *(2009.01)*

(52) Cooperative Patent Classification (CPC):
**G06N 5/01; G06N 3/04; H04W 24/02;**
**H04W 52/0206;** H04W 52/0216; H04W 52/0219;
Y02D 30/70

(86) International application number:
**PCT/SE2021/050391**

(87) International publication number:
**WO 2022/231485 (03.11.2022 Gazette 2022/44)**

(54) **NETWORK NODE AND METHOD PERFORMED THEREIN**

NETZWERKKNOTEN UND DARIN AUSGEFÜHRTES VERFAHREN

NOEUD DE RÉSEAU ET PROCÉDÉ MIS EN OEUVRE DANS CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.03.2024 Bulletin 2024/10**

(73) Proprietor: **Telefonaktiebolaget LM Ericsson (publ)**
**164 83 Stockholm (SE)**

(72) Inventors:
• **MASOUDI, Meysam**
**191 92 Sollentuna (SE)**
• **AZARI, Amin**
**177 30 JÄRFÄLLA (SE)**
• **CAVDAR, Cicek**
**117 50 STOCKHOLM (SE)**

(74) Representative: **Ericsson**
**Patent Development**
**Torshamnsgatan 21-23**
**164 80 Stockholm (SE)**

(56) References cited:
WO-A1-2019/125247    WO-A1-2020/001786
WO-A1-2020/171803    WO-A1-2021/063500
US-A1- 2015 119 047    US-A1- 2019 223 111
US-A1- 2022 335 337

• DLAMINI THEMBELIHLE, GAMBÍN ÁNGEL FERNÁNDEZ, MUNARETTO DANIELE, ROSSI MICHELE: "Online Supervisory Control and Resource Management for Energy Harvesting BS Sites Empowered with Computation Capabilities", WIRELESS COMMUNICATIONS AND MOBILE COMPUTING, JOHN WILEY & SONS, vol. 2019, 19 February 2019 (2019-02-19), pages 1 - 17, XP093002406, ISSN: 1530-8669, DOI: 10.1155/2019/8593808

• HLOPHE MDUDUZI COMFORT; MAHARAJ BODHASWAR T.: "QoS provisioning and energy saving scheme for distributed cognitive radio networks using deep learning", JOURNAL OF COMMUNICATIONS AND NETWORKS, NEW YORK, NY, USA,IEEE, US, vol. 22, no. 3, 17 July 2020 (2020-07-17), US
, pages 185 - 204, XP011799289, ISSN: 1229-2370, DOI: 10.1109/JCN.2020.000013

**Description**

TECHNICAL FIELD

Embodiments herein relate to a network node and a method performed therein for communication. Furthermore, a computer program and a computer readable storage medium are also provided herein. In particular, embodiments herein relate to usage of an artificial intelligence (AI) module when managing a feature relating to communication in a communication network.

BACKGROUND

In a typical communication network, user equipment (UE), also known as wireless communication devices, mobile stations, stations (STA) and/or wireless devices, communicate via for example a Radio Access Network (RAN) with one or more core networks (CN). The RAN covers a geographical area which is divided into service areas or cell areas, with each service area or cell area being served by radio network node such as an access node e.g. a Wi-Fi access point or a radio base station (RBS), which in some networks may also be called, for example, a NodeB, a gNodeB, or an eNodeB. The service area or cell area is a geographical area where radio coverage is provided by the radio network node. The radio network node operates on radio frequencies to communicate over an air interface with the UEs within range of the radio network node. The radio network node communicates over a downlink (DL) to the UE and the UE communicates over an uplink (UL) to the radio network node.

A Universal Mobile Telecommunications System (UMTS) is a third generation telecommunications network, which evolved from the second generation (2G) Global System for Mobile Communications (GSM). The UMTS terrestrial radio access network (UTRAN) is essentially a RAN using wideband code division multiple access (WCDMA) and/or High-Speed Packet Access (HSPA) for communication with user equipment. In a forum known as the Third Generation Partnership Project (3GPP), telecommunications suppliers propose and agree upon standards for present and future generation networks and UTRAN specifically, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. The RNCs are typically connected to one or more core networks.

Specifications for the Evolved Packet System (EPS) have been completed within the 3GPP and this work continues in the coming 3GPP releases, such as 5G, for example New Radio (NR), and beyond networks. The EPS comprises the Evolved Universal Terrestrial Radio Access Network (E-UTRAN), also known as the Long-Term Evolution (LTE) radio access network, and the Evolved Packet Core (EPC), also known as System Architecture Evolution (SAE) core network. E-UTRAN/LTE is a 3GPP radio access technology wherein the radio network nodes are directly connected to the EPC core network. As such, the Radio Access Network (RAN) of an EPS has an essentially "flat" architecture comprising radio network nodes connected directly to one or more core networks.

With the 5G technologies such as NR, focus is on a set of features such as the use of very many transmit- and receive-antenna elements that makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

Information and communication technology (ICT) industry is rapidly advancing towards 5G and beyond, in order to fulfill the ever-increasing demands for higher data rates and stringent quality-of-service (QoS). These diverse requirements pose a big challenge for the operation and management of 5G and beyond systems. Many research groups believe that 5G and beyond systems cannot meet their demands without the integration with artificial intelligence (AI), since the conventional approaches can no longer solve the new challenges efficiently. Therefore, there will be a need to revisit the actual methodologies and fully exploit the capabilities of AI for proper network planning and operations.

Nowadays, AI and its subcategories such as machine learning (ML) and deep learning have been evolving as the most promising solutions to improve the performance and robustness of 5G and beyond systems. These solutions are fueled by the massive amount of data generated in the communication networks and become feasible because of the availability of powerful data processing devices and techniques. These mechanisms allow communication networks to be both predictive and proactive. In recent years, AI based techniques have been applied in many aspects of 5G design including radio resource allocation, network management, cyber-security, etc. However, the impact of applying these solutions on the overall performance or end-to-end performance still needs more investigation. For instance, there are many energy-saving features with a lot of parameters to be tuned using AI based techniques. It is true that using AI based techniques, considerable energy savings can be achieved, but the energy savings usually come at the cost of trading the quality of service (QoS) in the network, or it may pose a conflict with other available features in the communication network.

This trade-off needs very careful consideration.

AI based techniques are using data usually extracted from a communication network, or from any network section in which an AI module is going to be applied. In this way the AI module understands the behavior and can make proper decisions with the aim of improving the performance of that particular section. However, there are several risks associated with the AI based techniques due to unexpected events in the communication network, such as e.g. inefficient training\learning, etc. When the communication network is in a situation involving making decision that may pose a risk, danger, or damages, the performance of AI based techniques is questionable. Therefore, the question of "when is it safe to use an AI module" is an issue which needs more investigations. AI and risk management is a wide topic, ranging from finance to engineering fields. However, the literature on the adaptation of AI based techniques to the field of ICT is evolving and rich. However, the literature on the risk management techniques is immature. The study in the document [1] Deloitte: AI and risk management Innovating with confidence, investigates the challenges to widespread AI adoption in financial services. It studies the risks and possible approaches, in general, to approach the risk analyses. The patent in [2] CN109447048B, proposes an AI agent as an early warning system which is used for collecting, analyzing, and evaluating the risk factors using internet of things (IoT) devices. The patents in [3-6] propose methods for managing sleep modes. WO 2021/063500 A1 describes a method for providing producer node machine learning based assistance.

SUMMARY

Currently, a lot of AI based techniques are implemented in communication networks and products, where AI based techniques are capable of improving the performance of that particular section in a communication network. Despite the appealing features of AI based techniques, there is a risk associated with the use of AI based techniques in a communication network, which makes the operators and vendors conservative about using AI based techniques in communication networks. For instance, AI based techniques are mostly relying on a data set extracted from the communication network, which data set is used to train an AI module. When the AI module is using such a data set, there might be some occasions in which the AI module is taking a wrong decision. This might occur due to different reasons such as lack of good training, abnormal behavior of data which has not been observed by the algorithm, and/or due to inaccurate design of the algorithm. The aforesaid reasons cause wrong decisions that may degrade the system performance and impose a risk of using an AI module in the communication network. Another critical challenge is a degradation of the performance of the AI module when data changes its behavior over time, or for a period of time, or an unexpected event happens in the communication network. Another issue is that if the AI module is trained using a data set in a first location, may then the AI module be deployed in other places in the communication network without posing risks? For example, if an AI module comprising an energy saving algorithm is trained in a radio network node, is it possible to use the same AI module in other radio network nodes?

These issues are stemmed from a fact that there is always a risk associated with using AI modules. Consequently, there is a need to quantify and measure a potential risk of using these AI modules in a communication network. Thus, an object of embodiments herein is to provide a mechanism for enabling communication in a communication network in an efficient and reliable manner.

According to an aspect the object is achieved by providing a method performed by a network node for managing communication in a communication network. The network node performs the steps indicated in the attached claim 1.

According to another aspect the object is achieved by providing a network node for managing communication in a communication network. The network node is configured to perform the functions indicated in the attached claim 11.

It is furthermore provided herein a computer program comprising instructions, which, when executed on at least one processor, cause the at least one processor to carry out any of the methods above, as performed by the network node. It is additionally provided herein a computer-readable storage medium, having stored thereon a computer program comprising instructions which, when executed on at least one processor, cause the at least one processor to carry out the method according to any of the methods above, as performed by the network node.

Embodiments herein introduce a functionality that defines a risk of making a wrong decision in the communication network. The risk is then compared with a threshold risk, i.e. the set level of risk, which is a maximum tolerable risk in using the AI module in the communication network. If the risk is higher than the set level of risk, the AI module should be deactivated temporarily.

Embodiments herein quantify the risk of using AI modules such as ML-based algorithms, for a feature such as an energy saving feature at a radio network node, thereby enabling communication in an efficient and reliable manner.

BRIEF DESCRIPTION OF THE DRAWINGS

Embodiments will now be described in more detail in relation to the enclosed drawings, in which:

Fig. 1     is a schematic overview depicting a communication network according to embodiments herein;

Fig. 2      is a schematic flowchart depicting a method performed by a network node according to embodiments herein;

Fig. 3a      is a combined flowchart and signalling scheme according to embodiments herein;

Fig. 3b      is a combined flowchart and signalling scheme according to embodiments herein;

Fig. 3c      is a combined flowchart and signalling scheme according to embodiments herein;

Fig. 4      is a schematic overview depicting an architecture using a method according to embodiments herein;

Fig. 5      is a schematic flowchart depicting a method according to embodiments herein;

Fig. 6      is a schematic overview depicting an architecture using a method according to embodiments herein;

Fig. 7      is a schematic overview depicting a model to be used in embodiments herein;

Fig. 8      is a schematic overview depicting a model to be used in embodiments herein;

Fig. 9      is a block diagram depicting a network node according to embodiments herein;

Fig. 10      shows a telecommunication network connected via an intermediate network to a host computer in accordance with some embodiments;

Fig. 11      shows a host computer communicating via a base station with a user equipment over a partially wireless connection in accordance with some embodiments;

Fig. 12      shows methods implemented in a communication system including a host computer, a base station and a user equipment in accordance with some embodiments;

Fig. 13      shows methods implemented in a communication system including a host computer, a base station and a user equipment in accordance with some embodiments;

Fig. 14      shows methods implemented in a communication system including a host computer, a base station and a user equipment in accordance with some embodiments; and

Fig. 15      shows methods implemented in a communication system including a host computer, a base station and a user equipment in accordance with some embodiments.

## DETAILED DESCRIPTION

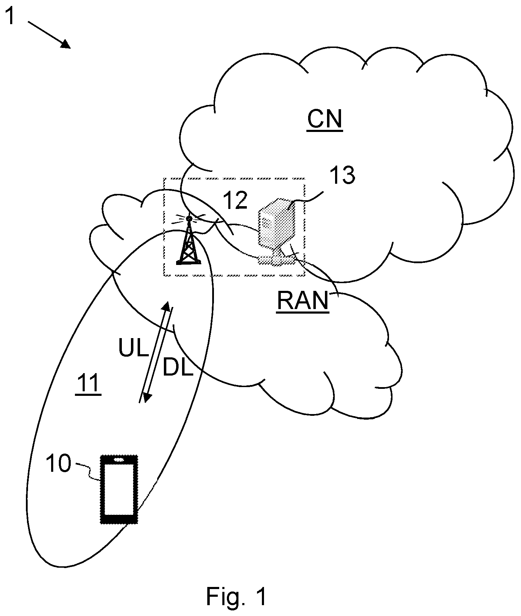

Embodiments herein relate to communication networks in general. **Fig. 1** is a schematic overview depicting **a communication network 1.** The communication network 1 comprises one or more RANs and one or more CNs. The communication network 1 may use a number of different technologies, such as Wi-Fi, Long Term Evolution (LTE), LTE-Advanced, NR, Wideband Code Division Multiple Access (WCDMA), Global System for Mobile communications/Enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in a 5G context, however, embodiments are applicable also in further development of the existing communication systems such as e.g. WCDMA and LTE.

In the communication network 1, wireless devices e.g. **a user equipment (UE) 10** such as a mobile station, a non-access point (non-AP) STA, a STA, a wireless device and/or a wireless terminal, communicate via one or more Access Networks (AN), e.g. a RAN, to one or more core networks (CN). It should be understood by those skilled in the art that "UE" is a non-limiting term which means any terminal, wireless communication terminal, internet of things (IoT) capable device, Machine Type Communication (MTC) device, Device to Device (D2D) terminal, or node e.g. smart phone, laptop, mobile phone, sensor, relay, mobile tablets or even a base station communicating within a cell.

The communication network 1 comprises **a radio network node 12** providing radio coverage over a geographical area, e.g. a first service area, of a first radio access technology (RAT), such as NR, LTE, UMTS, Wi-Fi or similar. The radio network node 12 may be a radio access network node such as radio network controller or an access point such as a wireless local area network (WLAN) access point or an Access Point Station (AP STA), an access controller, a base station, e.g. a radio base station such as a NodeB, an evolved Node B (eNB, eNodeB), a base transceiver station, Access Point Base Station, base station router, a transmission arrangement of a radio base station, a stand-alone access point or any other network unit capable of serving a UE within the service area served by the radio network node 12 depending e.g. on the first radio access technology and terminology used.

In the communication network, an AI module may be used to trigger a feature relating to communication e.g. an energy saving function at the radio network node 12, a load balancing function at the radio network node 12, or similar. An energy saving feature may comprise a function for managing sleep modes, and/or a function for performing a carrier shutdown. Embodiments herein provide a mechanism that quantify a risk of using the AI module for managing the feature. Thus, it is herein provided **a network node 13** or a logic function in a network node for managing activation and deactivation of the AI module based on a determined risk or actually a level of risk. The determined level of risk is associated with a degradation of a performance in the communication network due to activation of the AI module. The network node 13 may be: co-located with the radio network node 12 (function in the radio network node 12); a stand-alone network node; a distributed node; or a logic function in any network node in the communication network 1. Thus, the network node 13 may be exemplified herein as a stand-alone network node, the radio network node 12 or a distributed node covering the radio network node 12 (see dashed box).

Embodiments herein quantify the risk of using AI modules such as ML-based algorithms or deep learning algorithms, for managing one or more features such as energy saving features at the radio network node 13. Embodiments herein are compatible with any AI-based solution for energy saving features, for example, an AI module used to manage sleep mode algorithms. The network node 13 may decide when it is not appropriate to use the AI module in terms of a potential performance degradation. Furthermore, the network node 13 may detect abnormal behaviour of the data traffic and may then decide to retrain the AI module. Thus, it is herein proposed a concept of risk monitoring that can predict the expected performance of using the AI module to manage a feature in the communication network 1, which risk is used to determine whether to active or deactivate the AI module.

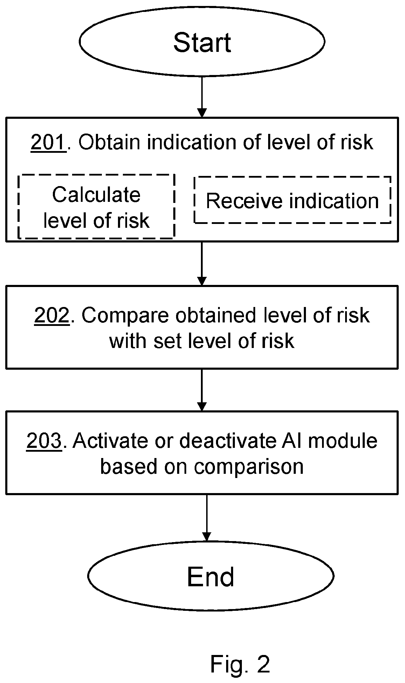

Example embodiments of a method performed by the network node 13 for managing communication in the communication network will now be described with reference to a flowchart depicted in **Fig. 2.** The actions do not have to be taken in the order stated below, but may be taken in any suitable order.

**Action 201.** The network node 13 obtains an indication relating to a level of risk in using the AI module for managing the feature relating to communication, wherein the level of risk is associated with a level of a degradation of a performance in the communication network. The network node 13 may receive the indication from another network node or may calculate the level of risk using a calculation model. The calculation model may comprise a Markov model. The calculation model may use one or more of the following inputs: arrival rate of user equipments; transition rate between different modes of the feature, e.g. energy saving feature; time to service user equipments; and number of active user equipments over a period of time. The calculated level of risk may be a measure of improvement using the feature managed by the AI module relative a degradation of another feature such as performance. The AI module for managing the feature relating to communication may be used for controlling sleep modes of the radio network node 12, for example, initiation of sleep modes. The AI module may comprise a neural network model, a ML- model, or a deep learning model. The feature may be for an energy saving feature or a load balancing feature.

**Action 202.** The network node 13 compares the obtained level of risk with a set level of risk.

**Action 203.** The network node 13, based on the comparison, activates or deactivates the AI module for managing the feature. For example, the AI module may be deactivated when the obtained level of risk is above the set level of risk, otherwise the AI module is activated. The AI module may aim at saving energy in the communication network 1, e.g. the AI module is managing discontinuous transmission (DTX) cycles or sleeping modes. The AI module may be located, for example, implemented, at the radio network node 12, for example, for managing discontinuous reception (DRX) parameters such as an active duration value, active duration parameter, or similar.

It should be noted that the obtained indication may further indicate a retraining of the AI module when differing from an actual indication such as a present value. As an example, the network node 13 may monitor obtained present information, e.g., duration of sleeping, ON/OFF state duration, sleeping time, and arrival rate. The observed information may be fed to a Markov model to obtain the level of risk such as a risk of making a wrong decision (RWD) value. Furthermore, an actual RWD value in the communication network may be calculated, for example, based on number of delayed user per given time in the system divided by a portion of time the radio network node 12 is sleeping. Then, the actual RWD may be compared with the RWD value resulted from the Markov model. Based on this comparison, if the actual RWD value does not match with the RWD value from the Markov model, the AI module should be retrained and may be deactivated since the observed traffic and RWD analysis indicate an abnormal traffic behavior.

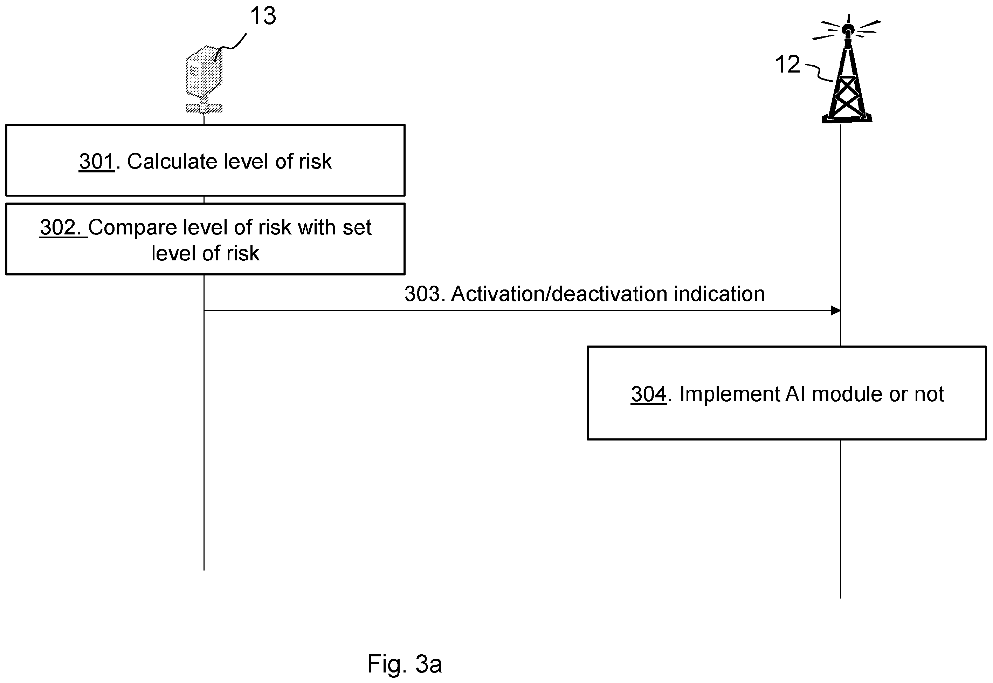

**Fig. 3a** is a combined flowchart and signalling scheme according to some embodiments wherein the network node 13 is exemplified as a stand-alone node that can activate or deactivate the AI module at the radio network node 12.

**Action 301.** The network node 13 may calculate the level of risk in using the AI module for managing the feature such as an energy saving feature. The calculation may comprise a Markov model.

**Action 302.** The network node 13 may then compare the calculated level of risk with the set level of risk to determine whether to use the AI module or not.

**Action 303.** The network node 13 may further transmit to the radio network node 12 an indication related to the comparison such as an activation indication or a deactivation indication.

**Action 304.** The radio network node 12, receiving the indication, may then implement the AI module or not for managing the feature based on the received indication.

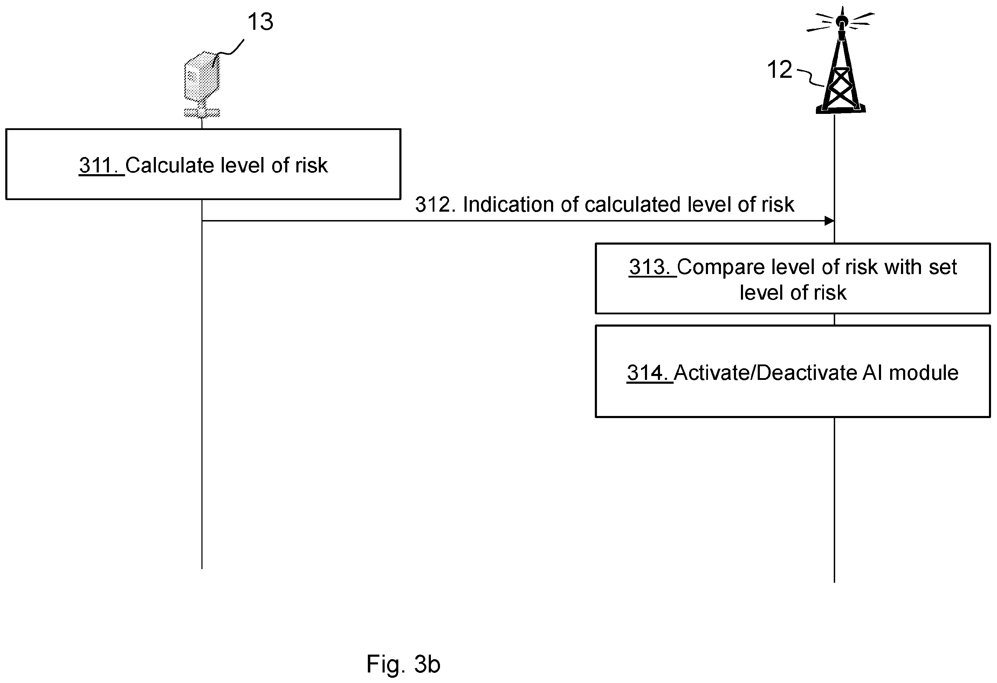

**Fig. 3b** is a combined flowchart and signalling scheme according to some embodiments wherein the network node 13 is exemplified as a distributed node also covering the radio network node 12 performing some of the actions.

**Action 311.** The network node 13 may calculate the level of risk in using the AI module for managing the feature such as an energy saving feature. The calculation may comprise a Markov model.

**Action 312.** The network node 13 may further transmit to the radio network node 12 an indication related to the calculation of the level of risk such as the calculated value or an index pointing to the calculated value.

**Action 313.** The radio network node 12 may then compare the indicated level of risk with the set level of risk, i.e. the maximum tolerable risk of degrading the performance a certain level.

**Action 314.** The radio network node 12 then activates or deactivates the AI module for managing the feature based on the comparison.

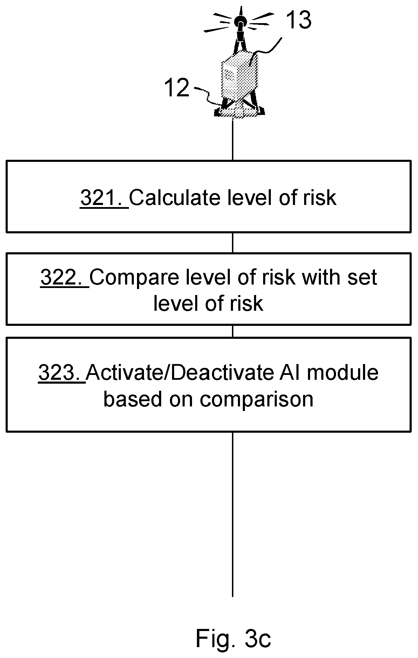

**Fig. 3c** is a combined flowchart and signalling scheme according to some embodiments wherein the network node 13 is exemplified as the radio network node 12.

**Action 321.** The radio network node 12 may calculate the level of risk in using the AI module for managing the feature such as an energy saving feature. The calculation may comprise a Markov model.

**Action 322.** The radio network node 12 may then compare the calculated level of risk with the set level of risk, i.e. the maximum tolerable risk of degrading the performance a certain level.

**Action 323.** The radio network node 12 then activates or deactivates the AI module for managing the feature based on the comparison.

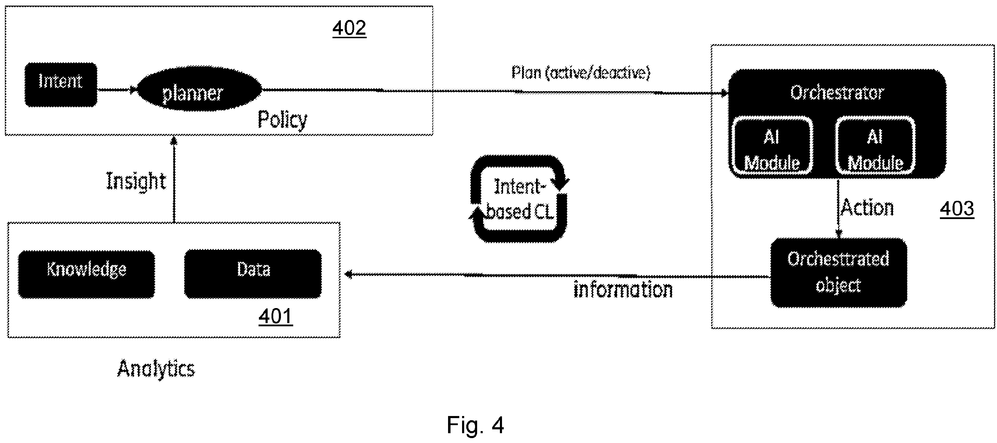

Embodiments herein, exemplified in **Fig. 4,** provide a procedure that may be used to quantify the risk of using the AI module such as an ML algorithm for, for example, energy saving features at the radio network node 12. The network node 13 may predict high risk times in which energy saving features should not be used.

Information is obtained by **an analytics module 401** from data, knowledge of the actual risk in the communication network, and parameters of the AI module. This information or insights are fed to **a policy module 402.** The policy module 402 observes incoming intents and calculates the level of risk and gives all the information to a planner, e.g. a planning unit. The planner collects all the information and based on its policy concerning the level of risk, the planner may update an orchestrator of an orchestrator **module 403** with the calculated risk. The orchestrator of the orchestrator module 403 may activate or deactivate the AI module(s) based on the received calculated risk and may also raise a flag for the retraining. The orchestrator of the orchestrator module may further send an order from the AI module(s) to an orchestrated object relating to the feature.

One of the main challenges of using AI modules, is to detect the times in which the performance of the AI module is not reliable. Therefore, embodiments herein use a risk control loop to monitor the performance of the AI module. The risk of making wrong decision (RWD) is defined as the performance degradation associated to the action of making a wrong decision. Depending on the use case of the AI module the definition of this risk might be different. For instance, when the use case is for implementing energy saving features at the radio network node 12, the risk can be defined as delay in serving UEs. It should be noted that the network node 13 according to any of the embodiments above may calculate the level of risk such as a RWD value in the Markov model e.g. using Equation 3 below (any other method than a Markov model can be used to calculate the risk). Values of parameters such as $\lambda$ and Vs may be used for this calculation. These values of parameters are available at the network node 13 and/or the radio network node 12 in the communication network 1 and may be used to calculate the RWD value. The calculated RWD value may be compared with an actual risk. The actual risk may be obtained from number of delayed user per given time in the communication network divided by portion of time the radio network node 12 is sleeping. When the comparison indicates a difference, this may indicate that the AI module is to be deactivated and retrained.

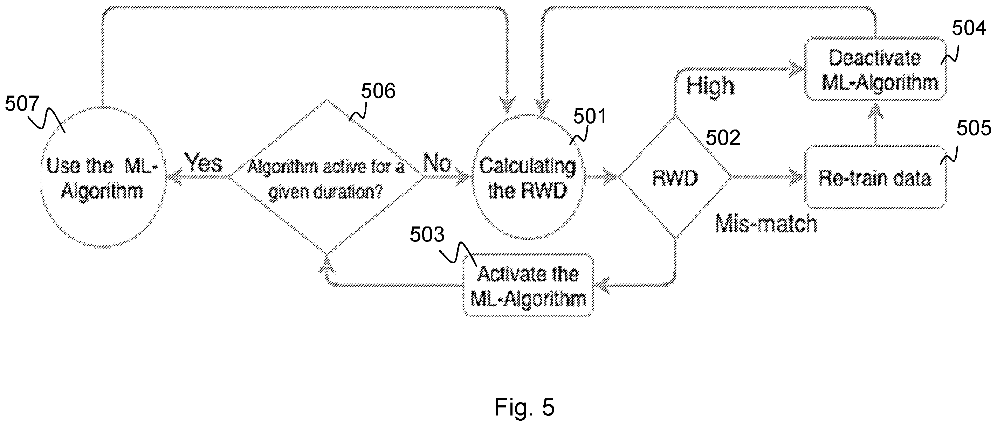

In **Fig. 5** it is shown a risk control loop for monitoring the performance of using the AI module such as an ML algorithm. The value of the risk i.e. the RWD value is calculated continuously in the communication network, see action **501.** The RWD value is compared with a maximum tolerable risk, see action **502.** The maximum tolerable risk may be calculated beforehand, using a mathematical model or data driven model of the communication network such as a Markov model. If the RWD value is below the maximum tolerable risk, the AI module may be used, see action **503.** If the RWD value is higher than the maximum tolerable risk it may not be safe to use the AI module and the AI module may be temporarily deactivated to avoid potential performance degradation, see action **504.** If the RWD value is different than an actual RWD value, this indicates that the AI module will not perform as expected and this indicates an abnormal behavior of data and the AI module may need to be retrained over a new set of data, see action **505.** When the AI module is determined to be activated, it is checked whether the AI module is to be run for a given duration, action **506.** That being the case, the AI module is used, see action **507.**

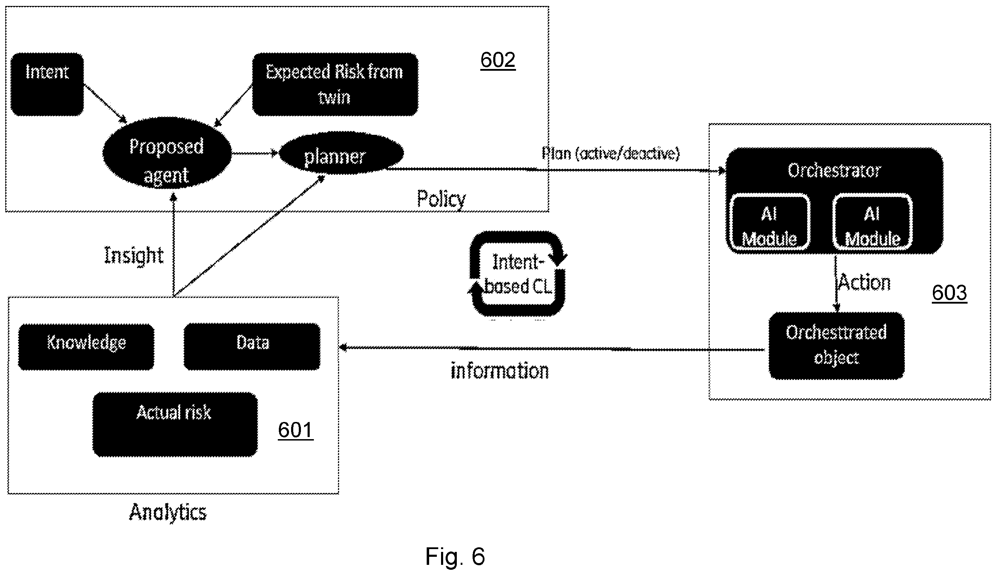

In **Fig. 6** and in the analytics section in **an analytics module 601,** the information is obtained from data, the actual risk in the network, and parameters of the AI module model (knowledge). This information is fed to a proposed agent in **a policy module 602** for monitoring behaviour. The proposed agent observes the incoming intents and calculates the level of risk and gives all the information to a planner, e.g. a planning unit. The planner collects all the information and based on its policy concerning the level of risk. The planner may update an orchestrator in **an orchestrator module 603** with the calculated level of risk. The orchestrator of the orchestrator module 603 may activate or deactivate the AI module(s) based on the received calculated risk and may also raise the flag for the retraining of the AI module(s). The orchestrator of the orchestrator module 603 may further send an order from the AI module(s) to an orchestrated object relating to the feature.

Embodiments herein may be used for different use cases. For example, embodiments herein may be used for managing energy saving features, such as for a sleep mode management function, at the radio network node 12 as described below.

Mobile network operators anticipate a surge in their network energy consumption due to exponentially increasing network traffic and introduction of new services. In order to make their network sustainable, energy efficiency becomes a key pillar in future deployments. Studies show that radio network nodes such as base stations consume a major share of an overall network energy consumption. Thus, reducing energy consumption of radio network nodes may boost the energy efficiency of the communication network. In particular, putting radio network nodes to sleep is one way of reducing energy consumption in the communication networks, however, putting a radio network node into a sleep mode may lead to longer service delay for UEs. Due to a variation of the traffic profile during a day, a communication network may have a low load during certain hours. During the day, there are periods of short durations in which no UE is connected to the radio network node 12 while the radio network node 12 is active and consuming energy. In such periods, the radio network node 12 may put some of its components into a sleep mode and hence save energy.

Different levels of sleep modes (SM) have been implemented in radio network nodes. Each SM has a specific minimum duration and energy consumption, meaning that if the radio network node 12 goes into $SM_i$, the radio network node 12 is to stay in sleep for at least the minimum duration of $SM_i$. Therefore, the radio network node 12 may comprise an algorithm to decide which SM to be used based on the input traffic. Different studies show that AI modules may be used to manage the SMs at cost of acceptable performance degradation experienced by the UEs, see for instance [7,8,9]. Although the energy savings obtained by utilizing the SMs, reported by studies such as [8,9,10], are very appealing, there is a risk of using such techniques in the communication network. The risk can be for example the delay in serving UEs, or creating a coverage problem in the communication network.

According to [7], hardware components of a radio network node can be grouped, according to their activation/deactivation delays, into four groups that can be shut down together to save power whenever the hardware components are not needed, forming four different levels of SMs.

- **SM1:** This SM is the fastest, and the shallowest sleep mode, whose duration is comparable to a symbol time Ts. Whenever a radio network node does not have any traffic over the entire band of sub-carriers during a symbol time per antenna, a power amplifier of the radio network node can be switched off to save power. This mode is available and known in current technologies as cell DTX.
- **SM2:** A slightly deeper sleep level can be reached by switching off one more set of components with slower (de) activation transition time than that of SM1, if this longer delay can be accepted by the communication network. In this sleep mode, the transition is on the transmission time interval (TTI) scale, i.e., 1 msec, which is a duration of a sub-frame constituting 2 resource blocks (RB) or 14 resource elements (RE) assuming frequency division duplex (FDD) Frame Structure.
- **SM3:** This mode has a further deeper sleeping level but with a minimum duration of a 10 msec frame (10 sub-frames).
- **SM4:** This is the deepest SM with a minimum duration of 100 frames (1 sec).

Therefore, multi-level sleep modes can be used for putting the radio network node 12 into sleep to save more energy. The decision on which sleep mode the radio network node 12 should use, may be made by the AI module such as an AI-based sleep mode management algorithm.

As mentioned earlier the energy saving features come with a cost of performance degradations. The performance degradations may be seen as the risk of using such energy saving features. The main objective of embodiments herein is to avoid performance degradations a certain level due to the usage of the AI module for the managing the feature such as an energy saving feature, by finding the times when it is unsafe to use the AI module.

In order to avoid such degradations, it is herein proposed a framework to quantify the risk of using SM management techniques. Below is a Markov model defined for the SM features. To estimate and predict the risk in the communication network using the local information at the network node 13 exemplified as the radio network node 12, the Markov model needs local data, which data can be provided by the radio network node 12. Since the Markov model is implemented in the radio network node 12 the delay of communication is negligible. Based on the obtained information the model may dynamically monitor the risk of putting the radio network node 12 into sleep modes and also compare the actual risk with the expected risk. The expected risk is the risk value that is expected given the information of the radio network node status i.e. the calculated level of risk, and the actual risk is the value of risk measured in the communication network. Based on a comparison of the calculated level of risk and the set level of risk, the radio network node 12 may decide whether the AI module should be activated or not based on the potential risk of activating the SM features. In particular, if the value of risk is high, the sleeping features can be deactivated for a while to avoid any unnecessary incurred delay to the UEs. If the actual value of risk is different than the expected calculated value of risk, for example, differ in value from the expected value or differ more than a threshold, then that means the observed data pattern might be different than what was used to train the AI module . This means that this is an indication of an abnormal behaviour of data in the radio network node and two actions may be taken: a) retrain the AI module with data to learn the new behaviour; 2) deactivate the sleeping feature to avoid performance degradation until the AI module is trained with the new data. The radio network node 12 continuously monitors the risk value and when the risk is low the AI module used for managing sleep mode come back to action again. Thus, embodiments herein may detect abnormal behavior of input traffic and may eliminate the risk of using SM features when that will degrade the performance above a level.

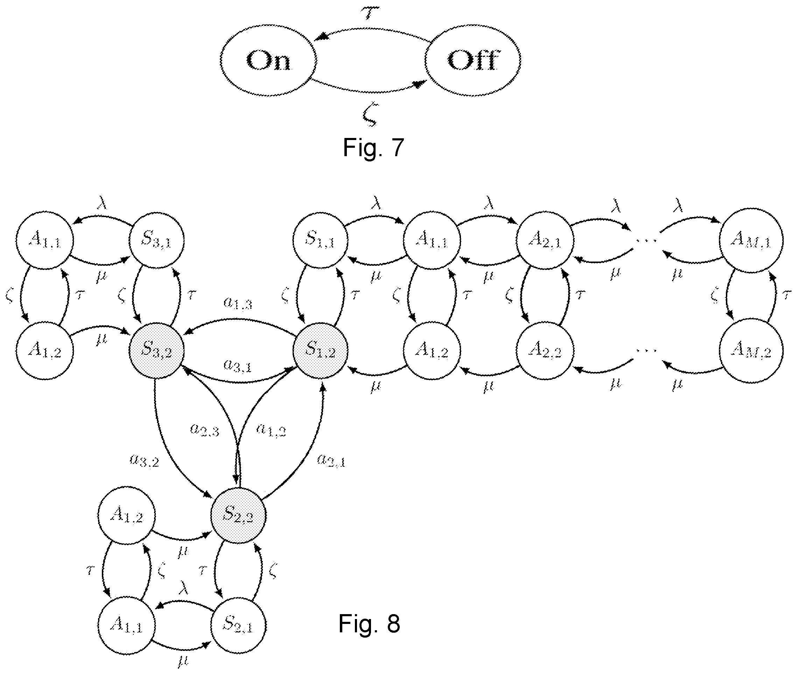

A well-known and mathematically tractable model of bursty arrivals is an interrupted Poisson process (IPP). In IPP, as illustrated in **Fig. 7,** arrivals have two states i.e., ON and OFF states. In ON state, arrivals follow the Poisson model with a parameter $\lambda$ and in OFF state there is no arrival. Assume that the transition rate from ON to OFF is denoted by $\zeta$, and OFF to ON is denoted $\tau$ , the steady state probabilities are derived as,

$$P_{ON} = \frac{\tau}{\tau + \zeta}$$

$$P_{OFF} = \frac{\zeta}{\tau + \zeta}$$

In this study, IPP traffic is considered, though by setting $\zeta = 0$ it can be converted to Poisson Process (PP) model.

The SM feature is modeled as a hidden Markov model illustrated in **Fig. 8.** In the following it is explained how the Markov model works, the required information for the Markov model, the considered performance metrics used when calculating the level of risk, and the monitoring of the performance metrics.

The states contain information on 1) the level sleep mode, 2) number of UEs in active mode, and 3) whether there are arrivals or not (ON state or OFF state). For instance, state S(i, j), i $\in$ {1,2,3} , j $\in$ {1,2 }, denotes the state that the radio network node 12 is in $SM_i$ and the arrivals are in the state j , where j = 1 means ON state and j = 2 means OFF state. If the radio network node 12 is in state A(m, j), m $\in$ {1,2, ..., M } and j $\in$ {1,2 }, then the radio network node 12 is active and m number of UEs are served by the radio network node 12. It may be assumed that a maximum M numbers of UEs can be served.

When all UEs in the radio network node 12 have been served, the radio network node 12 goes to one of the SMi-s and stays there until a new UE arrives. Before arrivals of the UEs, the state changes from s(i, 2) to s(i, 1). When new UEs arrive, the radio network node 12 may go from state s(i, 1) to state A(1,1). However, the radio network node 12 must wait for the duration of present SMi to activate the sleeping components. It should be noted that when the radio network node 12 is in any of the sleep modes, the radio network node may switch between SMs.

According to Fig. 8, and given the model parameters, the sleeping probability may be analyzed, and the risk of taking wrong action e.g. RWD value, for the input traffic may be calculated. The following probabilities may be defined:

$v_{i,j}$ is the probability that the radio network node 12 is in state S(i, j).
$u_{m,j}$ is the probability that the radio network node 12 is in state A(m, j).

The probability that the radio network node 12 is in sleep mode is summation of the probabilities that the radio network node 12 is in SMi, which is given by,

$$V_s = \sum_{i=1}^{2} \sum_{j=1}^{3} v_{i,j}$$

Equation 1

Balance equations are used to form a set of equations. By solving the set of equations, the steady state probabilities, i.e., $v_{i,j}$ and $u_{m,j}$ may be derived.

If the radio network node 12 is in any of the $SM_i$-s and new UEs arrive, the new UEs must wait until the radio network node 12 wakes up and goes to the active mode again. Let the be $U_s$ is the average number of UEs that may be served by the radio network node when it is in the SM, and may be calculated as,

$$U_s = \lambda v_{1,1} + \lambda v_{2,1} + \lambda v_{3,1}$$

Equation 2

where $\lambda$ is UE arrival rate and $v_{i,1}$, i $\in$ {1, 2,3} are the probabilities of being in both ON state and SMi.

The larger the value of $U_s$ is, the more number of UEs will experience delay until they are served. From the operators' perspective, smaller $U_s$ is more preferable. However, this metric is incapable of measuring the performance of the radio network node 12 running the sleeping algorithm. For instance, when the communication network is busy, i.e. $\lambda$ is high, the probability of having the radio network node is a sleep mode is low. However, having the radio network node in one inappropriate sleeping cycle this may result in a large number of UEs experiencing delay. On the other hand, in off peak

hours, where $\lambda$ is low and $V_s$ is high, very few UEs may be experiencing delay with a higher probability that the radio network node 12 is in a sleep mode. Therefore, the parameter $U_s$ alone is lacking enough information to show higher risk of incurring delay at high $\lambda$. To tackle this issue, embodiments herein use a metric called RWD to measure the risk when a wrong action may occur. In these embodiments $U_s$, e.g. as calculated above, and the probability of sleeping, e.g. in both ON and OFF state, may be taken into account. The RWD may then be formulated as,

$$RWD = \frac{U_S}{V_S} = \frac{\lambda v_{1,1} + \lambda v_{2,1} + \lambda v_{3,1}}{V_S} \qquad \text{----------------Equation 3}$$

When the communication network is in the peak hours, $U_s$ may be high and $V_s$ may be low, hence, there may not be much energy to save and the level of risk is high. Therefore, any wrong decision from the AI module may result in a large number of UEs experiencing delay, and thus the RWD value is high. In the off-peak hours, $U_s$ may be low and $V_s$ may be high. Since a low number of UEs are in the network, the RWD value is low. The RWD value may be used to determine the right times to deactivate the energy saving features, i.e., putting the radio network node 12 into SMs, in order to avoid delaying large number of UEs. There are two scenarios in which sleeping may have large risks.

When the communication network is very crowded and there is not much room to save energy (without incurring delay), it is not beneficial to put the radio network node 12 into sleep modes. Therefore, the sleeping features, i.e. putting the radio network node into SMs, may be disabled temporarily until the sleeping features become beneficial again. The AI module may learn these periods and may avoid putting the radio network node 12 into a sleeping mode in such events, but sometimes the AI module may choose the wrong action. Usually, it takes some time for the AI module to realize the inappropriate actions and update its policy. Using the RWD according to embodiments herein, such delays may be avoided by comparing the RWD value with a reference RWD value i.e. the set level of risk. The reference RWD value can be (dynamically) set by the operator depending on the hours of the day, and assured QoS, etc.

When the behavior of UEs or the traffic pattern changes, e.g., arrival rate and ON/OFF state duration, and the AI module is not previously trained over the new traffic pattern, the sleeping decision of the AI module may yield to unnecessary wake-ups or inappropriate sleeping. It may further take some time for the radio network node 12 to realize the abnormal behavior of the input traffic. This may result in unnecessary energy consumption and/or unacceptable incurred delays. Since the AI module is trained on previous data, the RWD may be (pre)calculated as a reference value. Then, the actual RWD in the communication network may be compared with the reference value. If the calculated and actual RWD mismatch, i.e. differ in value, with each other, that means that the input traffic is different than the expected traffic. In case of mismatch, the radio network node 12 may disable the sleeping features for a while until either the AI module is trained over the new batch of data or the traffic behavior becomes normal again.

In order to obtain the parameters of the IPP model, a well-known backward-forward algorithm, i.e., Baum-Welch algorithm, may be used. This backward-forward algorithm computes the statistics of the input traffic sequence and then updates the maximumlikelihood estimate of the Markov model parameters, i.e., ON/OFF state duration and arrival rate.

When the radio network node 12 is in the active mode the average service rate, i.e., $\mu$ is available and can be reported to the Markov model. Parameters $a_{i,j}$, $i \in \{1,2,3\}$, $j \in \{1,2\}$ are the transition rates which radio network node goes from one SM to another SM while radio network node is in OFF state meanwhile represent the learned SM management policy. These transition rates are calculated during the training phase and can be updated during the test phase by keeping track of the average number of times the radio network node 12 switches from one SM to another SM.

The Markov model implemented at the radio network node 12 or the network node 13 may be used for evaluating the performance of the sleep mode management algorithm. This Markov model may obtain the initial value for the required parameters from the training phase and may dynamically update the parameters to estimate the RWD value. This RWD value is the expected value for RWD which radio network node 12 is supposed to observe when the SM algorithm is in action. In Fig. 5 a scheme is illustrated of monitoring the RWD value. At the heart of this scheme, a network monitoring module monitors the communication network and obtains the required information, e.g., duration of sleeping, ON/OFF state duration, sleeping time, and arrival rate of UEs. The obtained information is fed to a calculation and by the use of Equation 3, the actual RWD in the communication network is calculated. Then, the actual RWD is compared with the value of RWD resulted from the Markov model. Based on this comparison, if the RWD value does not match with the RWD value from the Markov model, the radio network node 12 needs to retrain data and deactivate the sleeping mode feature since the observed traffic and RWD analysis indicate abnormal traffic behavior. If the RWD value matches with the RWD value of the Markov model but still the value of RWD is high, despite of normal behavior of data the radio network node 12 may decide to deactivate the SMs managed by the AI module. Otherwise, the radio network node 12 may activate the SMs managed by the AI module and may benefit from the energy saving feature. If SMs are active, then the AI module is used to decide on when and which SMs should be used. Using the risk monitoring procedure according to embodiments herein, the operators can make sure that their energy saving features do not incur unacceptable delay to the UEs or is not missing an opportunity when it is safe to save energy.

It is worth mentioning that the feature such a sleep mode management algorithm may be used only when RWD value is low. The radio network node 12 may dynamically keep track of parameter such as, average arrival rate and may calculate the RWD value. The RWD value may be stored for a time duration, T, to make sure that the decisions are not made based on instantaneous changes. To avoid spontaneous decisions, an average of RWD may be used to cancel out the instantaneous changes in data traffic and thus the RWD. Therefore, the AI module may be activated when the average value of RWD value is low and matches with the expected RWD value.

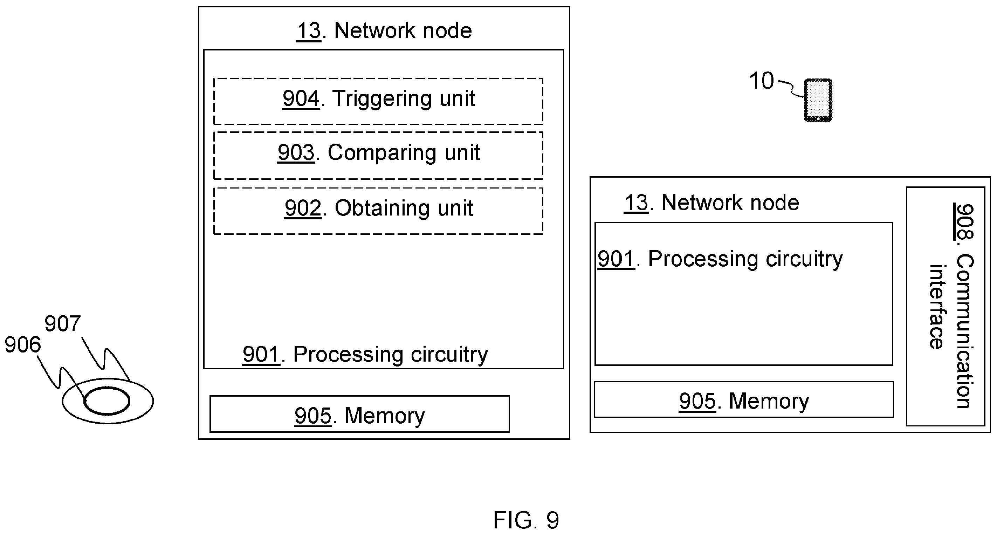

**Fig. 9** shows a block diagram depicting the network node 13 in two embodiments for managing communication in the communication network. The network node 13 may comprise the radio network node 12 comprising the AI module.

The network node 13 may comprise **processing circuitry 901,** e.g. one or more processors, configured to perform the methods herein.

The network node 13 may comprise **an obtaining unit 902,** e.g. a receiver, a calculating unit, or a transceiver. The network node 13, the processing circuitry 901 and/or the obtaining unit 902 is configured to obtain, from within or another network node, the indication relating to the level of risk in using the AI module for managing the feature relating to communication, wherein the level of risk is associated with the level of the degradation of the performance in the communication network. The AI module may aim at saving energy. The AI module for managing the feature may be for controlling sleep modes of the radio network node. The network node 13, the processing circuitry 901 and/or the obtaining unit 902 may be configured to obtain the indication by calculating the level of risk using a calculation model. The calculation model may comprise a Markov model. The calculation model may use one or more of the following inputs: arrival rate of user equipments; transition rate between different modes of an energy saving feature; time to service user equipments; and number of active user equipments over a period of time. The calculated level of risk may be a measure of improvement of the feature relative degradation of the performance. The network node 13, the processing circuitry 901 and/or the obtaining unit 902 may be configured to receive the indication from another network node. The AI module may comprise a neural network model, a machine learning model, or a deep learning model. The obtained indication may indicate the retraining of the AI module when differing from an actual value of the risk.

The network node 13 may comprise a **comparing unit 903.** The network node 13, the processing circuitry 901 and/or the comparing unit 903 is configured to compare the obtained level of risk with the set level of risk. The network node 13, the processing circuitry 901 and/or the comparing unit 903 may be configured to compare an actual value of risk with the calculated value and decide whether to retrain the AI module or not.

The network node 13 may comprise a **triggering unit 904.** The network node 13, the processing circuitry 901 and/or the triggering unit 904 is configured to, based on the comparison, activate or deactivate the AI module for managing the feature relating to communication. The AI module may be deactivated when the obtained level of risk is above the set level of risk, otherwise the AI module may be activated.

The network node 13 further comprises **a memory 905.** The memory comprises one or more units to be used to store data on, such as indications, strengths or qualities, indications, reconfiguration, sleep mode configurations, values, scheduling information, timers, applications to perform the methods disclosed herein when being executed, and similar. The network node 13 comprises **a communication interface 908** comprising transmitter, receiver, transceiver and/or one or more antennas. Thus, it is herein provided the network node for handling communication in a wireless communications network, wherein the network node comprises processing circuitry and a memory, said memory comprising instructions executable by said processing circuitry whereby said network node is operative to perform any of the methods herein.

The methods according to the embodiments described herein for the network node 13 are respectively implemented by means of e.g. **a computer program product 906** or a computer program product, comprising instructions, i.e., software code portions, which, when executed on at least one processor, cause the at least one processor to carry out the actions described herein, as performed by the network node 13. The computer program product 906 may be stored on **a computer-readable storage medium 907,** e.g. a universal serial bus (USB) stick, a disc or similar. The computer-readable storage medium 907, having stored thereon the computer program product, may comprise the instructions which, when executed on at least one processor, cause the at least one processor to carry out the actions described herein, as performed by the network node 13. In some embodiments, the computer-readable storage medium may be a non-transitory or transitory computer-readable storage medium.

As will be readily understood by those familiar with communications design, that functions means or modules may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a radio network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of communications receivers will appreciate the cost, performance, and maintenance trade-offs inherent in these design choices.

**OTT**

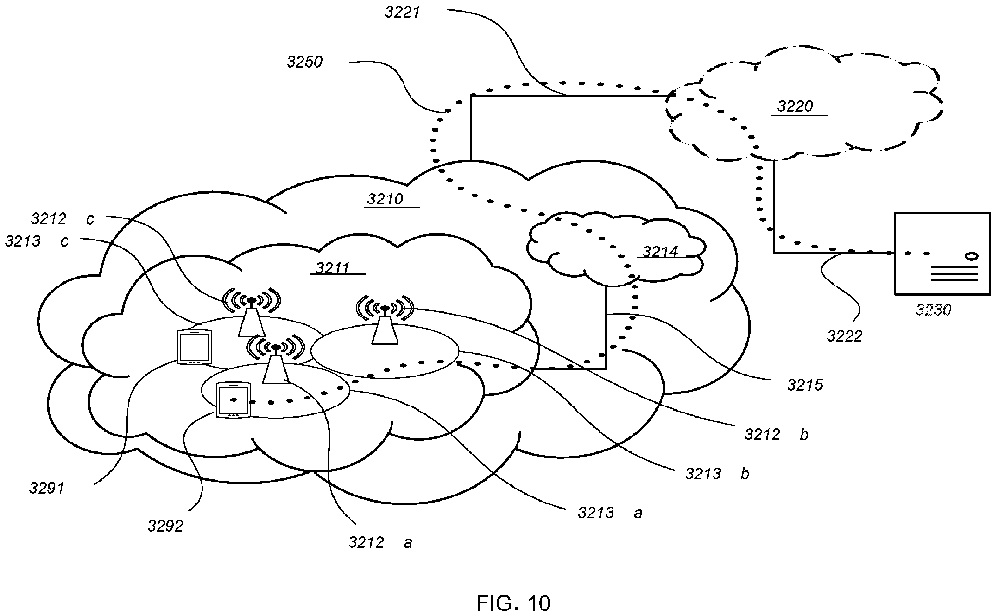

**Fig. 10** shows a Telecommunication network connected via an intermediate network to a host computer in accordance with some embodiments. With reference to Fig. 10, in accordance with an embodiment, a communication system includes telecommunication network 3210, such as a 3GPP-type cellular network, which comprises access network 3211, such as a radio access network, and core network 3214. Access network 3211 comprises a plurality of base stations 3212a, 3212b, 3212c, such as NBs, eNBs, gNBs or other types of wireless access points being examples of the radio network node 12 above, each defining a corresponding coverage area 3213a, 3213b, 3213c. Each base station 3212a, 3212b, 3212c is connectable to core network 3214 over a wired or wireless connection 3215. A first UE 3291 located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example being examples of the wireless device 10 above, the disclosed embodiments are equally applicable to a situation where a sole UE is in the coverage area or where a sole UE is connecting to the corresponding base station 3212.

Telecommunication network 3210 is itself connected to host computer 3230, which may be embodied in the hardware and/or software of a standalone server, a cloudimplemented server, a distributed server or as processing resources in a server farm. Host computer 3230 may be under the ownership or control of a service provider, or may be operated by the service provider or on behalf of the service provider. Connections 3221 and 3222 between telecommunication network 3210 and host computer 3230 may extend directly from core network 3214 to host computer 3230 or may go via an optional intermediate network 3220. Intermediate network 3220 may be one of, or a combination of more than one of, a public, private or hosted network; intermediate network 3220, if any, may be a backbone network or the Internet; in particular, intermediate network 3220 may comprise two or more sub-networks (not shown).

The communication system of Figure 10 as a whole enables connectivity between the connected UEs 3291, 3292 and host computer 3230. The connectivity may be described as an over-the-top (OTT) connection 3250. Host computer 3230 and the connected UEs 3291, 3292 are configured to communicate data and/or signaling via OTT connection 3250, using access network 3211, core network 3214, any intermediate network 3220 and possible further infrastructure (not shown) as intermediaries. OTT connection 3250 may be transparent in the sense that the participating communication devices through which OTT connection 3250 passes are unaware of routing of uplink and downlink communications. For example, base station 3212 may not or need not be informed about the past routing of an incoming downlink communication with data originating from host computer 3230 to be forwarded (e.g., handed over) to a connected UE 3291. Similarly, base station 3212 need not be aware of the future routing of an outgoing uplink communication originating from the UE 3291 towards the host computer 3230.

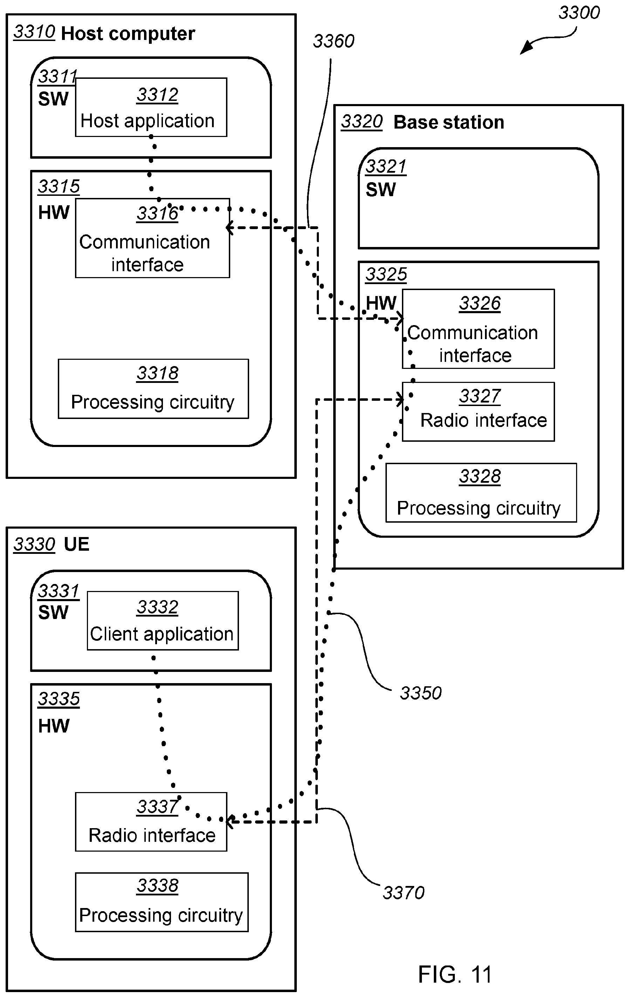

**Fig. 11** shows a host computer communicating via a base station and with a user equipment over a partially wireless connection in accordance with some embodiments

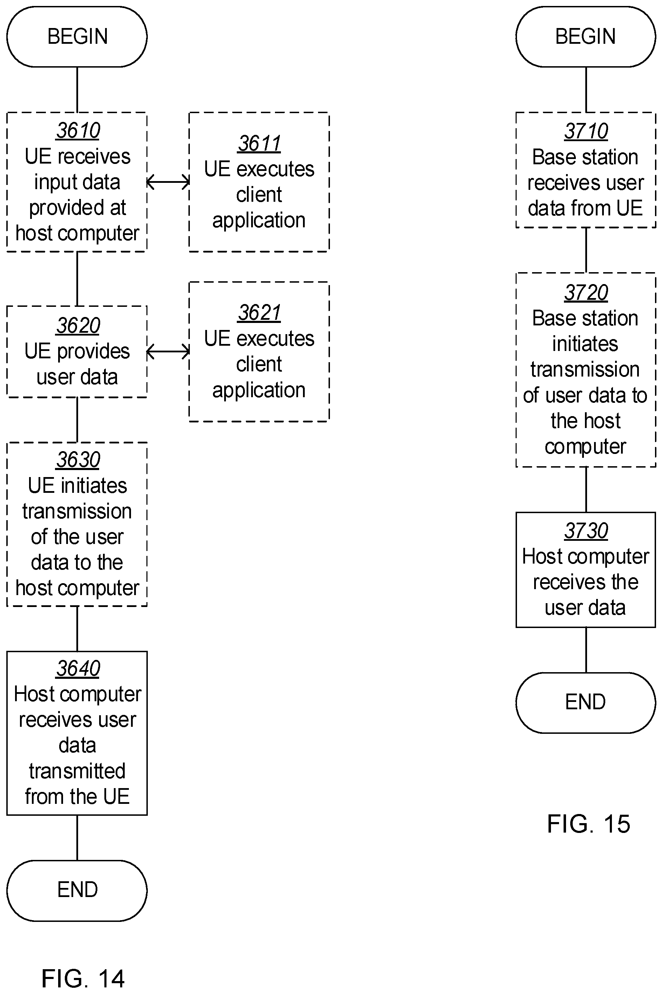

Example implementations, in accordance with an embodiment, of the UE, base station and host computer discussed in the preceding paragraphs will now be described with reference to Fig 15. In communication system 3300, host computer 3310 comprises hardware 3315 including communication interface 3316 configured to set up and maintain a wired or wireless connection with an interface of a different communication device of communication system 3300. Host computer 3310 further comprises processing circuitry 3318, which may have storage and/or processing capabilities. In particular, processing circuitry 3318 may comprise one or more programmable processors, application-specific integrated circuits, field programmable gate arrays or combinations of these (not shown) adapted to execute instructions. Host computer 3310 further comprises software 3311, which is stored in or accessible by host computer 3310 and executable by processing circuitry 3318. Software 3311 includes host application 3312. Host application 3312 may be operable to provide a service to a remote user, such as UE 3330 connecting via OTT connection 3350 terminating at UE 3330 and host computer 3310. In providing the service to the remote user, host application 3312 may provide user data which is transmitted using OTT connection 3350.

Communication system 3300 further includes base station 3320 provided in a telecommunication system and comprising hardware 3325 enabling it to communicate with host computer 3310 and with UE 3330. Hardware 3325 may include communication interface 3326 for setting up and maintaining a wired or wireless connection with an interface of a different communication device of communication system 3300, as well as radio interface 3327 for setting up and maintaining at least wireless connection 3370 with UE 3330 located in a coverage area (not shown in Fig. 11) served by base station 3320. Communication interface 3326 may be configured to facilitate connection 3360 to host computer 3310. Connection 3360 may be direct or it may pass through a core network (not shown in Fig 11) of the telecommunication system and/or through one or more intermediate networks outside the telecommunication system. In the embodiment shown, hardware 3325 of base station 3320 further includes processing circuitry 3328, which may comprise one or more programmable processors, application-specific integrated circuits, field programmable gate arrays or combinations of these (not shown) adapted to execute instructions. Base station 3320 further has software 3321 stored internally or accessible via an external connection.

Communication system 3300 further includes UE 3330 already referred to. The UE's 3330 hardware 3335 may include radio interface 3337 configured to set up and maintain wireless connection 3370 with a base station serving a coverage area in which UE 3330 is currently located. Hardware 3335 of UE 3330 further includes processing circuitry 3338, which may comprise one or more programmable processors, application-specific integrated circuits, field programmable gate arrays or combinations of these (not shown) adapted to execute instructions. UE 3330 further comprises software 3331, which is stored in or accessible by UE 3330 and executable by processing circuitry 3338. Software 3331 includes client application 3332. Client application 3332 may be operable to provide a service to a human or non-human user via UE 3330, with the support of host computer 3310. In host computer 3310, an executing host application 3312 may communicate with the executing client application 3332 via OTT connection 3350 terminating at UE 3330 and host computer 3310. In providing the service to the user, client application 3332 may receive request data from host application 3312 and provide user data in response to the request data. OTT connection 3350 may transfer both the request data and the user data. Client application 3332 may interact with the user to generate the user data that it provides.

It is noted that host computer 3310, base station 3320 and UE 3330 illustrated in Fig. 11 may be similar or identical to host computer 3230, one of base stations 3212a, 3212b, 3212c and one of UEs 3291, 3292 of Fig. 10, respectively. This is to say, the inner workings of these entities may be as shown in Fig. 11 and independently, the surrounding network topology may be that of Fig. 10.

In Fig. 11, OTT connection 3350 has been drawn abstractly to illustrate the communication between host computer 3310 and UE 3330 via base station 3320, without explicit reference to any intermediary devices and the precise routing of messages via these devices. Network infrastructure may determine the routing, which it may be configured to hide from UE 3330 or from the service provider operating host computer 3310, or both. While OTT connection 3350 is active, the network infrastructure may further take decisions by which it dynamically changes the routing (e.g., on the basis of load balancing consideration or reconfiguration of the network).

Wireless connection 3370 between UE 3330 and base station 3320 is in accordance with the teachings of the embodiments described throughout this disclosure. One or more of the various embodiments improve the performance of OTT services provided to UE 3330 using OTT connection 3350, in which wireless connection 3370 forms the last segment. More precisely, the teachings of these embodiments make it possible to run an AI module in the communication network in a reliable manner leading to a more energy efficient consumption and better responsiveness.

A measurement procedure may be provided for the purpose of monitoring data rate, latency and other factors on which the one or more embodiments improve. There may further be an optional network functionality for reconfiguring OTT connection 3350 between host computer 3310 and UE 3330, in response to variations in the measurement results. The measurement procedure and/or the network functionality for reconfiguring OTT connection 3350 may be implemented in software 3311 and hardware 3315 of host computer 3310 or in software 3331 and hardware 3335 of UE 3330, or both. In embodiments, sensors (not shown) may be deployed in or in association with communication devices through which OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of OTT connection 3350 may include message format, retransmission settings, preferred routing etc.; the reconfiguring need not affect base station 3320, and it may be unknown or imperceptible to base station 3320. Such procedures and functionalities may be known and practiced in the art. In certain embodiments, measurements may involve proprietary UE signaling facilitating host computer 3310's measurements of throughput, propagation times, latency and the like. The measurements may be implemented in that software 3311 and 3331 causes messages to be transmitted, in particular empty or 'dummy' messages, using OTT connection 3350 while it monitors propagation times, errors etc.

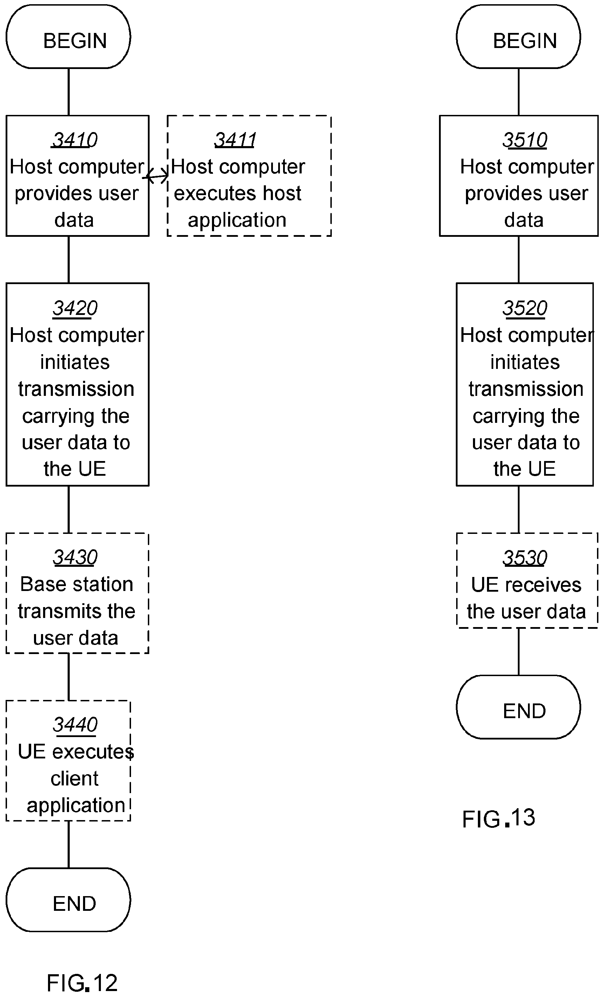

**Fig. 12** shows methods implemented in a communication system including a host computer, a base station and a user equipment in accordance with some embodiments.

The communication system includes a host computer, a base station and a UE which may be those described with reference to Fig. 10 and Fig. 11. For simplicity of the present disclosure, only drawing references to Fig. 12 will be included in this section. In step 3410, the host computer provides user data. In sub step 3411 (which may be optional) of step 3410, the host computer provides the user data by executing a host application. In step 3420, the host computer initiates a transmission carrying the user data to the UE. In step 3430 (which may be optional), the base station transmits to the UE the user data which was carried in the transmission that the host computer initiated, in accordance with the teachings of the embodiments described throughout this disclosure. In step 3440 (which may also be optional), the UE executes a client application associated with the host application executed by the host computer.

**Fig. 13** shows methods implemented in a communication system including a host computer, a base station and a user equipment in accordance with some embodiments.

The communication system includes a host computer, a base station and a UE which may be those described with reference to Fig. 10 and Fig. 11. For simplicity of the present disclosure, only drawing references to Fig. 13 will be included in this section. In step 3510 of the method, the host computer provides user data. In an optional substep (not shown) the host computer provides the user data by executing a host application. In step 3520, the host computer initiates a transmission carrying the user data to the UE. The transmission may pass via the base station, in accordance with the teachings of the embodiments described throughout this disclosure. In step 3530 (which may be optional), the UE receives the user data carried in the transmission.

**Fig. 14** shows methods implemented in a communication system including a host computer, a base station and a user equipment in accordance with some embodiments.

The communication system includes a host computer, a base station and a UE which may be those described with reference to Fig. 10 and Fig. 11. For simplicity of the present disclosure, only drawing references to Fig. 14 will be included in this section. In step 3610 (which may be optional), the UE receives input data provided by the host computer. Additionally or alternatively, in step 3620, the UE provides user data. In substep 3621 (which may be optional) of step 3620, the UE provides the user data by executing a client application. In substep 3611 (which may be optional) of step 3610, the UE executes a client application which provides the user data in reaction to the received input data provided by the host computer. In providing the user data, the executed client application may further consider user input received from the user. Regardless of the specific manner in which the user data was provided, the UE initiates, in substep 3630 (which may be optional), transmission of the user data to the host computer. In step 3640 of the method, the host computer receives the user data transmitted from the UE, in accordance with the teachings of the embodiments described throughout this disclosure.

**Fig. 15** show methods implemented in a communication system including a host computer, a base station and a user equipment in accordance with some embodiments.

The communication system includes a host computer, a base station and a UE which may be those described with reference to Fig. 10 and Fig. 11. For simplicity of the present disclosure, only drawing references to Fig. 15 will be included in this section. In step 3710 (which may be optional), in accordance with the teachings of the embodiments described throughout this disclosure, the base station receives user data from the UE. In step 3720 (which may be optional), the base station initiates transmission of the received user data to the host computer. In step 3730 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims and their legal equivalents.

References

1. https://www2.deloitte.com/content/dam/Deloitte/nl/Documents/innovatie/de loitte-nl-innovate-lu-ai-and-risk-management.pdf

2. 詹志超, *Artificial intelligence early warning system,* CN1094470488

3. Yeong-Moon, et al, Controlling the sleep mode and awake mode in a wireless communication system, EP 1 473 881.

4. WU, Huaming, Supporting a base station to enter and leave sleep mode in a wireless communication system, Application number: 13850895.7

5. Gi Won Park, et al, Method for saving power of a femto base station using sleep period synchronization, US 9,264,993 B2

6. Nylander et al., Energy efficient base station entering sleep mode, US 9,332,498 B2.

7. Debaillie B, Desset C, Louagie F. A flexible and future-proof power model for cellular base stations. In2015 IEEE 81st Vehicular Technology Conference (VTC Spring) 2015 May 11 (pp. 1-7). IEEE.

8. *https://www.ericsson.com/en/blog/2019/9/energy-consumption-5g-nr*

9. https://www.ericsson.com/en/cases/2019/augmenting-mimo-energymanagement-with-machine-learning-and-ai

10. Masoudi, M., Khafagy, M.G., Soroush, E., Giacomelli, D., Morosi, S. and Cavdar, C., 2020, August. Reinforcement learning for traffic-adaptive sleep mode management in 5G networks. In 2020 IEEE 31st Annual International Symposium on Personal, Indoor and Mobile Radio Communications (pp. 1-6). IEEE.

**Claims**

1. A method performed by a network node (12,13) for managing communication in a communication network, the method comprising:

   - obtaining (201) an indication relating to a level of risk in using an artificial intelligence, AI, module for managing a feature, wherein the level of risk is associated with a level of a degradation of a performance in the communication network, the obtaining (201) comprising calculating the level of risk using a calculation model, wherein the calculation model comprises a Markov model using one or more of the following inputs: arrival rate of user equipments; transition rate between different modes of an energy saving feature; time to service user equipments; and number of active user equipments over a period of time;
   - comparing (202) the obtained level of risk with a set level of risk; and
   - based on the comparison, activating or deactivating (203) the AI module for managing the feature.

2. The method according to claim 1 wherein the AI module is located at a radio network node.

3. The method according to any of the claims 1-2 wherein the calculated level of risk is a measure of improvement of the feature relative degradation of the performance.

4. The method according to any of claims 1-3 wherein the AI module for managing the feature is controlling sleep modes of a radio network node.

5. The method according to any of claims 1-4 wherein the indication is received from another network node.

6. The method according to any of claims 1-5 wherein the AI module is deactivated when the obtained level of risk is above the set level of risk, and otherwise the AI module is activated.

7. The method according to any of the claims 1-6, wherein the AI module comprises a neural network model, a machine learning model, or a deep learning model.

8. The method according to any of the claims 1-7 wherein the obtained indication indicates a retraining of the AI module when differing from an actual indication.

9. A computer program comprising instructions, which, when executed on at least one processor, cause the at least one processor to carry out the method according to any of the claims 1-8, as performed by the network node (12, 13).

10. A computer-readable storage medium, having stored thereon a computer program comprising instructions which, when executed on at least one processor, cause the at least one processor to carry out the method according to any of the claims 1-8, as performed by the network node.

11. A network node (12,13) for managing communication in a communication network, wherein the network node is configured to:

   obtain an indication relating to a level of risk in using an artificial intelligence, AI, module for managing a feature, wherein the level of risk is associated with a level of a degradation of a performance in the communication network, the obtaining comprising calculating the level of risk using a calculation model, wherein the calculation model comprises a Markov model using one or more of the following inputs: arrival rate of user equipments; transition rate between different modes of an energy saving feature; time to service user equipments; and number of active user equipments over a period of time;

compare the obtained level of risk with a set level of risk; and

based on the comparison, activate or deactivate the AI module for managing the feature.

**12.** The network node according to claim 12, is further configured to perform method according to any of the claims 2-8.

**Patentansprüche**

**1.** Verfahren, das durch einen Netzknoten (12, 13) durchgeführt wird, zum Verwalten von Kommunikation in einem Kommunikationsnetz, wobei das Verfahren Folgendes umfasst:

- Erlangen (201) einer Angabe in Bezug auf eine Gefahrebene bei Verwendung eines Moduls künstlicher Intelligenz, AI-Moduls, zum Verwalten einer Funktion, wobei die Gefahrebene einer Ebene einer Verschlechterung einer Leistung in dem Kommunikationsnetz zugeordnet ist, wobei das Erlangen (201) Berechnen der Gefahrebene unter Verwendung eines Berechnungsmodells umfasst, wobei das Berechnungsmodell ein Markow-Modell umfasst, das eine oder mehrere der folgenden Eingaben verwendet: eine Ankunftsrate von Benutzereinrichtungen; eine Übergangsrate zwischen unterschiedlichen Modi einer Energiesparfunktion; eine Zeit bis Wartung von Benutzereinrichtungen; und eine Anzahl von aktiven Benutzereinrichtungen über einen Zeitraum;

- Vergleichen (202) der erlangten Gefahrebene mit einer eingestellten Gefahrebene; und

- basierend auf dem Vergleich, Aktivieren oder Deaktivieren (203) des AI-Moduls zum Verwalten der Funktion.

**2.** Verfahren nach Anspruch 1,
wobei sich das AI-Modul an einem Funknetzknoten befindet.

**3.** Verfahren nach einem der Ansprüche 1-2,
wobei die berechnete Gefahrebene ein Verbesserungsmaß der relativen Verschlechterung der Leistung der Funktion ist.

**4.** Verfahren nach einem der Ansprüche 1-3,
wobei das AI-Modul zum Verwalten der Funktion Schlafmodi eines Funknetzknotens steuert.

**5.** Verfahren nach einem der Ansprüche 1-4,
wobei die Angabe von einem anderen Netzknoten empfangen wird.

**6.** Verfahren nach einem der Ansprüche 1-5,
wobei das AI-Modul deaktiviert wird, wenn die erlangte Gefahrebene über der eingestellten Gefahrebene liegt, und sonst das AI-Modul aktiviert wird.

**7.** Verfahren nach einem der Ansprüche 1-6,
wobei das AI-Modul ein neuronales Netzmodell, ein Maschinenlernmodell oder ein Deep-Learning-Modell umfasst.

**8.** Verfahren nach einem der Ansprüche 1-7,
wobei die erlangte Angabe ein Umtrainieren des AI-Moduls angibt, wenn sie sich von einer tatsächlichen Angabe unterscheidet.

**9.** Computerprogramm, umfassend Anweisungen, die, wenn sie auf mindestens einem Prozessor ausgeführt werden, den mindestens einen Prozessor dazu veranlassen, das Verfahren nach einem der Ansprüche 1-8, wie durch den Netzknoten (12, 13) durchgeführt, auszuführen.

**10.** Computerlesbares Speichermedium, das ein darauf gespeichertes Computerprogramm aufweist, umfassend Anweisungen, die, wenn sie auf mindestens einem Prozessor ausgeführt werden, den mindestens einen Prozessor dazu veranlassen, das Verfahren nach einem der Ansprüche 1-8, wie durch den Netzknoten durchgeführt, auszuführen.

**11.** Netzknoten (12, 13) zum Verwalten von Kommunikation in einem Kommunikationsnetz, wobei der Netzknoten zu Folgendem konfiguriert ist:

Erlangen einer Angabe in Bezug auf eine Gefahrebene bei Verwendung eines Moduls künstlicher Intelligenz, AI-Moduls, zum Verwalten einer Funktion, wobei die Gefahrebene einer Ebene einer Verschlechterung einer Leistung in dem Kommunikationsnetz zugeordnet ist, wobei das Erlangen Berechnen der Gefahrebene unter Verwendung eines Berechnungsmodells umfasst, wobei das Berechnungsmodell ein Markow-Modell umfasst, das eine oder mehrere der folgenden Eingaben verwendet: eine Ankunftsrate von Benutzereinrichtungen; eine Übergangsrate zwischen unterschiedlichen Modi einer Energiesparfunktion; eine Zeit bis Wartung von Benutzereinrichtungen; und eine Anzahl von aktiven Benutzereinrichtungen über einen Zeitraum;
Vergleichen der erlangten Gefahrebene mit einer eingestellten Gefahrebene; und
basierend auf dem Vergleich, Aktivieren oder Deaktivieren des AI-Moduls zum Verwalten der Funktion.

**12.** Netzknoten nach Anspruch 12, ist ferner dazu konfiguriert, Verfahren nach einem der Ansprüche 2-8 durchzuführen.

**Revendications**

**1.** Procédé mis en œuvre par un nœud de réseau (12,13) pour gérer la communication dans un réseau de communication, le procédé comprenant :

- l'obtention (201) d'une indication relative au niveau de risque lié à l'utilisation d'un module d'intelligence artificielle, AI, pour la gestion d'une fonctionnalité, dans lequel le niveau de risque est associé à un niveau de dégradation des performances au niveau du réseau de communication, l'obtention (201) comprend le calcul du niveau de risque à l'aide d'un modèle de calcul, dans lequel le modèle de calcul comprend un modèle de Markov utilisant une ou plusieurs des entrées suivantes : le taux d'arrivée des équipements utilisateurs ; le taux de transition entre différents modes d'une fonctionnalité d'économie d'énergie ; le temps de service des équipements utilisateurs ; et le nombre d'équipements utilisateurs actifs sur une période de temps ;
- la comparaison (202) du niveau de risque obtenu avec un niveau de risque fixé ; et
- sur la base de la comparaison, l'activation ou la désactivation (203) du module d'AI pour la gestion de la fonctionnalité.

**2.** Procédé selon la revendication 1,
dans lequel le module d'AI est situé sur un nœud de réseau radio.

**3.** Procédé selon l'une quelconque des revendications 1 à 2 dans lequel le niveau de risque calculé est une mesure d'amélioration de la fonctionnalité par rapport à la dégradation relative des performances.

**4.** Procédé selon l'une quelconque des revendications 1 à 3, dans lequel le module d'AI de gestion de la fonction commande les modes de veille d'un nœud de réseau radio.

**5.** Procédé selon l'une quelconque des revendications 1 à 4, dans lequel l'indication est reçue d'un autre nœud du réseau.

**6.** Procédé selon l'une quelconque des revendications 1 à 5, dans lequel le module d'AI est désactivé lorsque le niveau de risque obtenu est supérieur au niveau de risque défini, et sinon le module d'AI est activé.

**7.** Procédé selon l'une quelconque des revendications 1 à 6, dans lequel le module d'AI comprend un modèle de réseau neutre, un modèle d'apprentissage automatique ou un modèle d'apprentissage profond.

**8.** Procédé selon l'une quelconque des revendications 1 à 7, dans lequel l'indication obtenue indique un réentraînement du module d'AI lorsqu'elle diffère d'une indication réelle.

**9.** Programme informatique comprenant des instructions qui, lorsqu'elles sont exécutées sur au moins un processeur, amènent l'au moins un processeur à mettre en œuvre le procédé selon l'une quelconque des revendications 1 à 8, tel qu'il est mis en œuvre par le nœud de réseau (12, 13).

**10.** Support de stockage lisible par ordinateur, sur lequel est stocké un programme informatique comprenant des instructions qui, lorsqu'elles sont exécutées sur au moins un processeur, amènent l'au moins un processeur à mettre en œuvre le procédé selon l'une quelconque des revendications 1 à 8, tel qu'il est mis en œuvre par le nœud de réseau.

11. Nœud de réseau (12,13) destiné à gérer la communication dans un réseau de communication, dans lequel le nœud de réseau est configuré pour :

obtenir une indication relative au niveau de risque lié à l'utilisation d'un module d'intelligence artificielle, AI, pour la gestion d'une fonctionnalité, dans lequel le niveau de risque est associé à un niveau d'une dégradation des performances du réseau de communication, l'obtention comprenant le calcul du niveau de risque à l'aide d'un modèle de calcul, dans lequel le modèle de calcul comprend un modèle de Markov utilisant un ou plusieurs des entrées suivantes : le taux d'arrivée des équipements utilisateurs ; le taux de transition entre les différents modes d'une fonction d'économie d'énergie ; le temps de service des équipements utilisateurs ; et le nombre d'équipements utilisateurs actifs sur une période de temps ;
comparer le niveau de risque obtenu à un niveau de risque prédéfini ; et
en fonction de la comparaison, activer ou désactiver le module d'AI de gestion de la fonctionnalité.

12. Nœud de réseau selon la revendication 12 est en outre configuré pour mettre en œuvre le procédé selon l'une quelconque des revendications 2 à 8.

Fig. 1

Fig. 2

EP 4 331 258 B1

**13**

**12**

| 301. Calculate level of risk |
| --- |

| 302. Compare level of risk with set level of risk |
| --- |

303. Activation/deactivation indication →

| 304. Implement AI module or not |
| --- |

Fig. 3a

EP 4 331 258 B1

311. Calculate level of risk

312. Indication of calculated level of risk

313. Compare level of risk with set level of risk

314. Activate/Deactivate AI module

Fig. 3b

EP 4 331 258 B1

EP 4 331 258 B1

**13**

**12**

| 321. Calculate level of risk |

| 322. Compare level of risk with set level of risk |

| 323. Activate/Deactivate AI module based on comparison |

Fig. 3c

Fig. 4

Fig. 5

EP 4 331 258 B1

Fig. 6

EP 4 331 258 B1

Fig. 7

Fig. 8

EP 4 331 258 B1

EP 4 331 258 B1

**13. Network node**

┌─────────────────────────────────────┐
│  **901. Processing circuitry**       │
│                                      │
│  ┌─────────────────────────────┐    │
│  │  **904. Triggering unit**   │    │
│  └─────────────────────────────┘    │
│  ┌─────────────────────────────┐    │
│  │  **903. Comparing unit**    │    │
│  └─────────────────────────────┘    │
│  ┌─────────────────────────────┐    │
│  │  **902. Obtaining unit**    │    │
│  └─────────────────────────────┘    │
│                                      │
└─────────────────────────────────────┘

**905. Memory**

906 907

10

**13. Network node**

**901. Processing circuitry**

**905. Memory**

**908. Communication interface**

FIG. 9

FIG. 10

3221
3250
3220
3210
3212 c
3213 c
3211
3214
3230
3215
3212 b
3213 b
3213 a
3291
3292
3212 a
3222

EP 4 331 258 B1

3300

3310 **Host computer**

3311
**SW**

3312
Host application

3315
**HW**

3316
Communication interface

3318
Processing circuitry

3360

3320 **Base station**

3321
**SW**

3325
**HW**

3326
Communication interface

3327
Radio interface

3328
Processing circuitry

3330 **UE**

3331
**SW**

3332
Client application

3335
**HW**

3337
Radio interface

3338
Processing circuitry

3350

3370

FIG. 11

BEGIN

_3410_
Host computer provides user data

_3411_
Host computer executes host application

_3420_
Host computer initiates transmission carrying the user data to the UE

_3430_
Base station transmits the user data

_3440_
UE executes client application

END

FIG.12

BEGIN

_3510_
Host computer provides user data

_3520_
Host computer initiates transmission carrying the user data to the UE

_3530_
UE receives the user data

END

FIG.13

BEGIN

---

**3610**
UE receives input data provided at host computer

⟷

**3611**
UE executes client application

---

**3620**
UE provides user data

⟷

**3621**
UE executes client application

---

**3630**
UE initiates transmission of the user data to the host computer

---

**3640**
Host computer receives user data transmitted from the UE

---

END

FIG. 14

BEGIN

---

**3710**
Base station receives user data from UE

---

**3720**
Base station initiates transmission of user data to the host computer

---

**3730**
Host computer receives the user data

---

END

FIG. 15

## REFERENCES CITED IN THE DESCRIPTION

### Patent documents cited in the description

- CN 109447048 B
- WO 2021063500 A1
- CN 1094470488
- EP 1473881 A, Yeong-Moon,
- WO 13850895 A, WU, Huaming
- US 9264993 B2, Gi Won Park
- US 9332498 B2, Nylander

### Non-patent literature cited in the description

- A flexible and future-proof power model for cellular base stations. **DEBAILLIE B** ; **DESSET C** ; **LOUAGIE F.** In2015 IEEE 81st Vehicular Technology Conference (VTC Spring). IEEE., 11 May 2015, 1-7
- Reinforcement learning for traffic-adaptive sleep mode management in 5G networks. **MASOUDI, M.** ; **KHAFAGY, M.G.** ; **SOROUSH, E.** ; **GIACOMELLI, D.** ; **MOROSI, S** ; **CAVDAR, C.** 2020 IEEE 31st Annual International Symposium on Personal, Indoor and Mobile Radio Communications. IEEE., August 2020, 1-6